(19) Europäisches Patentamt
European Patent Office
Office européen des brevets

(11) **EP 2 680 158 A2**

(12) **DEMANDE DE BREVET EUROPEEN**

(43) Date de publication:
**01.01.2014 Bulletin 2014/01**

(51) Int Cl.:
**G06F 17/18** (2006.01)   **G01D 4/00** (2006.01)

(21) Numéro de dépôt: **13170953.7**

(22) Date de dépôt: **06.06.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **25.06.2012 FR 1256016**

(71) Demandeur: **Electricité de France**
**75008 Paris (FR)**

(72) Inventeur: **De Moliner Dumont, Anne**
**94110 Arcueil (FR)**

(74) Mandataire: **Cabinet Plasseraud**
**52, rue de la Victoire**
**75440 Paris Cedex 09 (FR)**

(54) **Procédé de détermination d'une valeur manquante parmi des données collectées pour une pluralite d'individus à une pluralité d'instants**

(57) tion concerne un procédé de détermination d'une valeur manquante parmi des données collectées pour une pluralité d'individus à une pluralité d'instants, la valeur manquante étant associée à un individu donné (i) non répondant à un instant donné (t), le procédé comprenant les étapes de :

- calcul d'un estimateur dynamique $\hat{y}_{i,t}^{d}$ de la valeur manquante à partir de valeurs collectées pour l'individu donné (i) à des instants précédents et suivants l'instant donné (t) ;

- calcul d'un estimateur statique $\hat{y}_{i,t}^{s}$ de la valeur manquante à partir de valeurs relatives à des individus (i') répondants à l'instant donné (t) ;

- détermination d'un estimateur combiné $\hat{y}_{i,t}^{\gamma}$ de la valeur manquante à partir de l'estimateur statique $\hat{y}_{i,t}^{s}$ et de l'estimateur dynamique $\hat{y}_{i,t}^{d}$.

Le procédé de l'invention permet de maximiser l'utilisation de l'information et d'améliorer la précision de l'estimateur final.

## FIG. 1

Dates 1 à T

Individu

Individu i : cadre dynamique

Valeur manquante de i à t

Instant t : cadre statique

## Description

L'invention concerne la correction des valeurs manquantes dans des courbes de charge, notamment dans le domaine des données de consommation électrique collectées auprès d'individus consommateurs d'électricité, mais également dans le domaine des données de consommation en gaz naturel ou en eau.

Récemment, les dispositifs d'acquisition de données installés par les fournisseurs de services électriques permettent de communiquer des données relatives à la consommation de l'individu alimenté en énergie électrique. Avec de tels systèmes, la quantité de courbes de charge disponibles va considérablement s'accroître pour le fournisseur. Il pourrait alors être envisageable d'utiliser des techniques d'échantillonnage pour estimer la consommation totale instantanée à chaque pas, par exemple demi-horaire, au périmètre d'un groupe de clients.

Par exemple, il est connu d'installer un système distribué de gestion pour superviser le fonctionnement de dispositifs d'acquisition de données installés par exemple chez chaque particulier ou entreprise. Chaque système de gestion est un ordinateur qui régit le fonctionnement des dispositifs d'acquisition de données. Chaque dispositif d'acquisition de données comprend de nombreux capteurs propres à surveiller la consommation de chaque particulier ou entreprise, éventuellement de chaque équipement de chaque particulier ou entreprise. Par exemple, le système de gestion peut être relié à des compteurs individuels pour l'électricité, le gaz, l'eau et autres.

Périodiquement, chaque système de gestion collecte des données de consommation via les différents capteurs et stockent ces données dans leur support de mémorisation. La fréquence à laquelle les données sont collectées est déterminée par exemple par le fournisseur de services. En général, la consommation des équipements de fonctionnement relativement stable peuvent être échantillonnés moins fréquemment, par rapport à un équipement ayant de grandes variations de consommation.

Les données collectées peuvent être analysées localement par le système de gestion ou être transmis via une liaison de communication pour analyse par un serveur central du fournisseur de services. La liaison de communication peut par exemple être de type Internet et/ou inclure des connexions sans fil. Le serveur central appartient par exemple à un fournisseur d'énergie électrique et recueille les données de consommation électriques transmises depuis une pluralité de systèmes de gestion.

Comme tout processus industriel de masse, la collecte des données est susceptible de subir toutes sortes d'aléas techniques le long de la chaîne de mesure et de remontée d'information. Les données pourraient ainsi contenir des valeurs manquantes. Ces données manquantes peuvent être assimilées à un problème de « non réponse » en sondages. Un traitement de cette non réponse sera nécessaire, afin d'une part de limiter au maximum la perte de précision due à l'absence de certaines données et d'autre part d'éviter les biais (c'est-à-dire les erreurs systématiques) sur l'estimation du total dus à d'éventuelles différences entre la population globale et les individus sans valeurs manquantes.

Les méthodes existantes de correction d'une « non réponse » peuvent être classées en deux catégories ; d'une part les méthodes dites « statiques » et d'autre part les méthodes dites « dynamiques ».

Les méthodes statiques, issues de la théorie des sondages, consistent à traiter la non réponse instant par instant à partir des autres individus présents au moment considéré et de l'information auxiliaire. La valeur manquante peut alors être imputée par régression, par le ratio, par la moyenne de classe, par le « hot-deck », accompagnée de méthodes de pondération. Ce sont les méthodes classiques utilisées en statistique d'enquête. Elles sont décrites par exemple dans l'ouvrage de P. Ardilly, « Techniques de sondages », paru aux éditions Technip en 2006. Pour ces méthodes, le biais sur l'estimateur du total est nul à tout instant, et la variance peut être estimée sous certaines conditions sur le plan de sondage.

Les méthodes dynamiques, issues des séries temporelles, corrigent la valeur manquante à partir des consommations du même individu à d'autres dates. La valeur manquante peut alors être imputée par interpolation linéaire, lissage exponentiel, ou autre. Ces méthodes fournissent des courbes cohérentes au niveau individuel. Cependant, pour ces méthodes, les biais instantanés sur l'estimation du total ne sont pas nuls, et il n'existe pas d'estimateur explicite de la variance. La publication de R.T. Clemen, "Combining forecasts: A review and annotated bibliography", International Journal of Forecasting 559-583, 1989, décrit l'utilisation de plusieurs estimateurs dynamiques mais sans problématique d'échantillonnage et ne fait pas intervenir d'estimateurs statiques.

Toutes ces méthodes, statiques et dynamiques, ont l'inconvénient de laisser de côté une partie de l'information disponible (le reste de la courbe de l'individu pour les estimateurs statiques et la consommation des autres individus au même instant pour les méthodes dynamiques). En outre, il est à noter que, du seul fait de la quantité conséquente de données collectées à traiter, toutes ces méthodes sont préférentiellement, voire incontournablement, mises en oeuvre par ordinateur, que ce soit au niveau de chaque système de gestion ou au niveau du serveur central du fournisseur de services.

Il existe donc un besoin pour une méthode permettant d'imputer les valeurs manquantes, c'est-à-dire de remplacer chacune d'entre elles par une valeur « crédible » calculée à partir du reste de la base de données, de manière à obtenir la meilleure précision possible sur l'estimation du total.

A cet effet, l'invention propose une méthode permettant de combiner un ou plusieurs estimateurs statiques et un ou plusieurs estimateurs dynamiques pour maximiser l'utilisation de l'information et donc améliorer la précision de l'estimateur final.

Plus particulièrement, l'invention concerne un procédé de détermination d'une valeur manquante parmi des données collectées pour une pluralité d'individus à une pluralité d'instants, la valeur manquante étant associée à un individu i donné non répondant à un instant t donné, le procédé comprenant les étapes de :

- calcul d'un estimateur dynamique $\hat{y}_{i,t,c}^{d}$ de la valeur manquante à partir de valeurs collectées pour l'individu donné à des instants précédents et suivants l'instant donné ;

- calcul d'un estimateur statique $\hat{y}_{i,t}^{s}$ de la valeur manquante à partir de valeurs relatives à des individus répondants à l'instant donné ;

- détermination d'un estimateur combiné $\hat{y}_{i,t}^{\gamma}$ de la valeur manquante à partir de l'estimateur statique $\hat{y}_{i,t}^{s}$ et de l'estimateur dynamique $\hat{y}_{i,t}^{d}$.

La méthode selon l'invention permet ainsi avantageusement d'estimer au moins une valeur manquante parmi les valeurs collectées et d'obtenir ainsi un ensemble de valeurs comprenant à la fois les valeurs collectées et au moins une valeur estimée, donc un ensemble comprenant davantage d'informations à exploiter que l'ensemble de départ. La méthode selon l'invention trouve une application à la problématique spécifique des données de type séries temporelles collectées par échantillonnage. La méthode de l'invention présente une précision meilleure par rapport aux méthodes existantes puisque davantage d'informations sont exploitées simultanément. Notamment, la méthode selon l'invention n'introduit pas de biais, contrairement aux méthodes dynamiques connues.

Selon un mode de réalisation, l'estimateur dynamique $\hat{y}_{i,t,c}^{d}$ est calculé pour une configuration donnée de la valeur manquante, la configuration étant fonction de la longueur de la série de valeurs manquantes successives et de l'emplacement de la valeur manquante dans cette série ; et/ou l'estimateur statique $\hat{y}_{i,t}^{s}$ est calculé pour une classe d'imputation donnée à laquelle appartient l'individu donné non répondant à l'instant donné.

La méthode selon l'invention s'adapte en fonction de la performance relative des estimateurs à chaque instant et pour chaque type de données manquantes : les méthodes statiques sont meilleures s'il y a peu d'individus manquants à une date donnée, tandis que les méthodes dynamiques sont meilleures pour les petits trous, ou bien si la valeur manquante considérée se trouve au bord du trou. La méthode selon l'invention permet d'adapter la combinaison à la situation, en donnant plus de poids à l'estimateur dynamique pour les petits trous que pour les gros trous par exemple.

Selon un premier mode de mise en oeuvre, la détermination de l'estimateur combiné $\hat{y}_{i,t}^{\gamma}$ consiste en une combinaison linéaire des estimateurs statique $\hat{y}_{i,t}^{s}$ et dynamique $\hat{y}_{i,t}^{d}$.

Par exemple, le procédé peut comprendre les étapes de :

- pour chaque individu répondant à l'instant donné, calculs d'un estimateur dynamique $\hat{y}_{i',t,c}^{d}$ et d'un estimateur statique $\hat{y}_{i',t}^{s}$, et détermination d'un estimateur combiné $\hat{y}_{i',t}^{\gamma}$ comme la combinaison linéaire desdits estimateurs statique et dynamique : $\hat{y}_{i',t}^{\gamma} = a + s\,\hat{y}_{i',t}^{s} + d\,\hat{y}_{i',t}^{d}$ ;

- détermination de coefficients de la combinaison linéaire à partir des individus répondants à l'instant donné, par régression linéaire des valeurs collectées $y_{i',t}$ à l'instant donné sur lesdits estimateurs statique $\hat{y}_{i',t}^{s}$ et dynamique

$\hat{y}_{i',t,c}^{d}$ ;

- détermination de l'estimateur combiné $\hat{y}_{i,t}^{\gamma}$ ] pour l'individu donné non répondant à l'instant donné en appliquant lesdits coefficients à la combinaison linéaire des estimateurs statique $\hat{y}_{i,t}^{s}$ et dynamique $\hat{y}_{i,t}^{d}$.

On peut calculer simultanément des valeurs manquantes de plusieurs individus non répondants. Pour chaque individu répondant, on calcule alors des estimateurs dynamiques pour chaque configuration de valeurs manquantes ; puis, pour chaque configuration, on détermine les coefficients de la combinaison linéaire correspondants à la configuration de valeur manquante considérée.

Selon un autre exemple, le procédé peut comprendre les étapes de :

- pour chaque individu répondant à l'instant donné, calculs d'un estimateur dynamique $\hat{y}_{i,t,c}^{d}$ et d'un estimateur statique $\hat{y}_{i',t}^{s}$, et calculs d'une perte dudit estimateur statique et d'une perte dudit estimateur dynamique, chaque perte $L(\hat{y})$ étant calculée comme :

$$L(\hat{y}) = \sum_{r} \frac{(1 - \hat{p}_{i'})w_{i'}}{\hat{p}_{i'}} E_{i'}^{2} ,$$

avec $\hat{p}_{i'}$, la probabilité de réponse estimée de l'individu à l'instant donné, avec $w_{i'}$ le poids de sondage de l'individu, et avec $E_{i'}$ l'erreur entre l'estimateur $\hat{y}_{i',t}$ et la valeur collectée $y_{i',t}$ pour ledit individu à l'instant donné ;
- détermination d'un paramètre de combinaison $\varphi_{c}$ comme :

$$\varphi_{c} = \frac{L(\hat{y}_{c}^{d})}{L(\hat{y}_{c}^{d}) + L(\hat{y}^{s})}$$

- détermination de l'estimateur combiné $\hat{y}_{i,t}^{\gamma}$ pour l'individu donné non répondant à l'instant donné en appliquant le paramètre de combinaison $\varphi_{c}$ à la combinaison linéaire des estimateurs statique $\hat{y}_{i,t}^{s}$ et dynamique $\hat{y}_{i,t,c}^{d}$ comme suit :

$$\hat{y}_{i',t}^{\gamma} = \varphi_c \hat{y}_{i,t}^{s} + (1 - \varphi_c) \hat{y}_{i,t}^{d}.$$

De même, on peut calculer simultanément des valeurs manquantes de plusieurs individus non répondants. Pour chaque individu répondant, on calcule alors des estimateurs dynamiques pour chaque configuration de valeurs manquantes ; puis, pour chaque configuration, on détermine un paramètre de combinaison $\varphi_c$ correspondant à la configuration de valeur manquante considérée.

Selon un deuxième mode de mise en oeuvre, la détermination de l'estimateur combiné $\hat{y}_{i,t}^{\gamma}$ consiste en une combinaison séquentielle des estimateurs statique $\hat{y}_{i,t}^{s}$ et * dynamique, $\hat{y}_{i,t}^{d}$.

Par exemple, le procédé peut comprendre les étapes de :

- pour chaque individu répondant à l'instant donné, calcul d'un estimateur dynamique $\hat{y}_{i',t,c}^{d}$ ;

- détermination de l'estimateur combiné $\hat{y}_{i,t}^{\gamma}$ pour l'individu donné non répondant à l'instant donné comme l'estimateur statique $\hat{y}_{i,t}^{s}$ 'de la valeur manquante calculée à partir de l'estimateur dynamique $\hat{y}_{i,t}^{d}$ de l'individu non répondant et d'une relation estimée entre estimateurs dynamiques $\hat{y}_{i',t,c}^{d}$ (et valeurs collectées $y_{i',t}$ sur les individus répondants à l'instant donné.

De même, on peut calculer simultanément des valeurs manquantes de plusieurs individus non répondants. Pour chaque individu répondant, on calcule alors des estimateurs dynamiques pour chaque configuration de valeurs manquantes ; puis, pour chaque configuration, on détermine l'estimateur combiné à partir de l'estimateur dynamique et d'une relation estimée pour chaque configuration de valeur manquante considérée.

Selon un autre exemple, le procédé peut comprendre les étapes de :

- pour chaque individu répondant à l'instant donné, calcul d'un estimateur dynamique $\hat{y}_{i',t,c}^{d}$ ;

- comparaison de l'estimateur dynamique $\hat{y}_{i,t}^{d}$ de l'individu donné non répondant à l'instant donné avec chaque estimateur dynamique $\hat{y}_{i',t,c}^{d}$ des individus répondants à l'instant donné, et détermination d'un plus proche voisin comme étant l'individu répondant à l'instant donné ayant estimateur dynamique $\hat{y}_{i',t,c}^{d}$ le plus proche de l'estimateur dynamique $\hat{y}_{i,t}^{d}$ de l'individu donné non répondant à l'instant donné ;

- détermination de l'estimateur combiné $\hat{y}_{i,t}^{\gamma}$ pour l'individu donné non répondant à l'instant donné comme l'estimateur statique $\hat{y}_{i,t}^{s}$ de la valeur manquante fixée à la valeur collectée $y_{i',t}$ du plus proche voisin à l'instant donné.

De même, on peut calculer simultanément des valeurs manquantes de plusieurs individus non répondants. Pour chaque individu répondant, on calcule alors des estimateurs dynamiques pour chaque configuration de valeurs manquantes ; puis, pour chaque configuration, on compare l'estimateur dynamique de l'individu non répondant avec chaque estimateur dynamique des individus répondants pour chaque configuration de valeur manquante considérée.

Selon une application du procédé, les données collectées sont des données de consommation électrique.

D'autres caractéristiques et avantages de l'invention apparaîtront à la lecture de la description détaillée ci-après, et des figures annexées qui représentent :

- figure 1, une illustration d'une « non réponse » d'un individu donné à un instant donné parmi un ensemble de valeurs collectées ;
- figure 2, des schémas illustrant la détermination d'un estimateur combiné selon l'invention pour une première configuration de données manquantes ;
- figure 3, des schémas illustrant la détermination d'un estimateur combiné selon l'invention pour une deuxième configuration de données manquantes.

L'invention propose un procédé de détermination d'une valeur manquante avec un estimateur combiné à partir d'un estimateur statique et d'un estimateur dynamique.

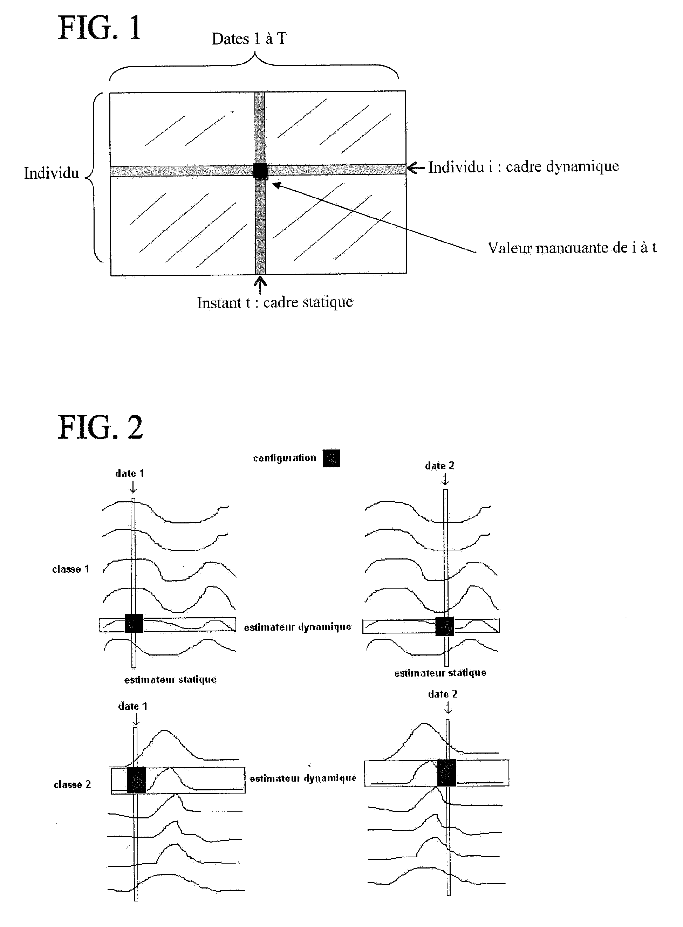

La figure 1 illustre la « non réponse » d'un individu i donné à un instant t donné parmi un ensemble de valeurs collectées pour n individus entre les instant 1 à T. Un estimateur va être déterminé pour cette valeur manquante à partir d'estimateurs statiques, c'est-à-dire fonction des données fournies par les autres individus i' répondants à l'instant t donné, et à partir d'estimateurs dynamiques, c'est-à-dire fonction des données collectées pour l'individu donné i à des instants précédents et suivants l'instant t donné.

La présente invention recherche la combinaison optimale d'un ou plusieurs estimateurs statiques et d'un ou plusieurs estimateurs dynamiques.

Selon un premier mode de mise en oeuvre, des méthodes dites « additives » sont considérées. On évalue la performance des différents estimateurs en recréant des trous sur les individus présents, et on définit l'estimateur combiné comme une combinaison linéaire des différents estimateurs dont les coefficients dépendent des performances constatées sur les individus présent, avec éventuellement une constante destinée à éliminer le biais induit par l'utilisation d'estimateurs dynamiques.

Selon un deuxième mode de mise en oeuvre des méthodes dites « séquentielles » sont considérées. L'imputation dynamique est utilisée en entrée d'une méthode statique d'imputation. Les rôles des méthodes ne sont plus symétriques puisqu'on utilise un estimateur après l'autre.

Quelle que soit la méthode retenue, la recherche de la combinaison optimale se fait séparément pour chaque triplet (horodate, classe d'imputation, configuration). En outre, lorsque l'imputation dynamique risque de donner de trop mauvais résultats (pour les courbes trop incomplètes ou encore les séries trop longues de valeurs manquantes), on utilisera l'estimateur statique au lieu d'un estimateur combiné.

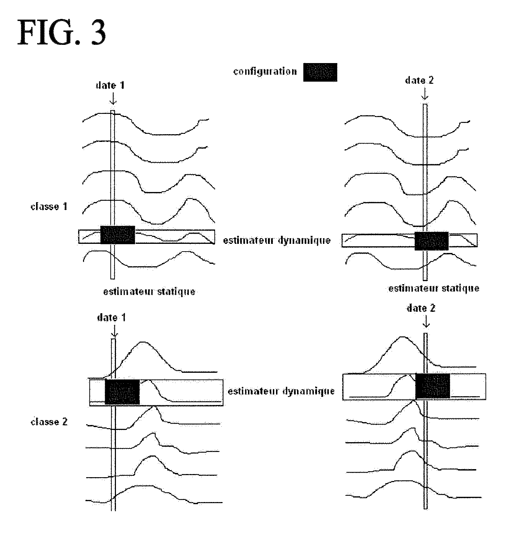

Les figures 2 et 3 illustrent de tels triplets : instant t donné de la valeur manquante, configuration c de la valeur manquante et classe d'imputation k de l'individu i non répondant.

Dans toute la suite, nous appellerons « configuration de non réponse », ou plus simplement « configuration » d'une valeur manquante la longueur de la série de valeurs manquantes à laquelle elle appartient ainsi que sa position dans cette série. Ces configurations peuvent être regroupées pour limiter les calculs. Par exemple, une configuration peut être constituée des trous de longueur 1, une autre des trous de longueur 2, une autre des valeurs « proches des bords » (4 premiers manquants par exemple) dans des trous de longueur 10 à 20, une autre des valeurs « du milieu » des trous de longueur 10 à 20. Deux valeurs manquantes d'une même série n'appartiendront donc pas forcément à la même configuration : si le trou est relativement long, on séparera bien les valeurs manquantes proches du bord des valeurs manquantes de milieu de trou pour lesquelles l'incertitude est beaucoup plus grande. Le fait de tenir compte de la configuration de la valeur manquante lors de la détermination de la combinaison optimale des estimateurs permet de favoriser un estimateur par rapport à l'autre selon que le trou de valeurs manquantes est gros ou petit. Par exemple, les estimateurs dynamiques seront moins précis sur les gros trous que sur les petits trous, et au milieu du trou que sur les bords, alors que la précision des estimateurs statiques ne dépend pas de la configuration puisqu'on travaille séparément instant par instant (en revanche, elle dépend du taux de valeurs manquantes à l'instant considéré).

En outre, chaque individu de l'échantillon considéré est contenu dans une classe d'imputation k. Les classes d'imputation sont homogènes et constituées au préalable. Par exemple, dans une application à la collecte de données relatives aux courbes de charge de consommation électrique, une classe d'imputation donnée contient des individus qui se ressemblent en termes de consommation (niveau, thermosensibilité,...) et de probabilité de non réponse.

Quatre méthodes vont maintenant être décrites en détails. Il est entendu que ces méthodes ne sont pas limitatives. Les méthodes décrites sont destinée à traiter une non réponse partielle (individus dont certaines valeurs sont présentes et certaines manquantes) et pas une non réponse totale (individus pour lesquelles toutes les valeurs sont manquantes). Pour les points manquants issus d'une courbe individuelle possédant trop de valeurs manquantes et/ou compris dans une série de valeurs manquantes trop longue (ces deux cas étant définis par des seuils fixés par l'utilisateur), l'estimateur combiné sera remplacé par l'estimateur statique.

Dans la suite, on utilisera les notations suivantes :

- Les individus sont indicés par i. Ils sont N dans la population et n dans l'échantillon, i.e. les individus dont on collecte les données.
- Les horodates sont indicées par t allant de 1 à T.
- Pour un individu i, on notera $w_i$ son poids de sondage (constant au cours du temps et égal à l'inverse de sa probabilité d'inclusion dans l'échantillon), $y_{it}$ sa consommation à l'instant t, $a_{it}$ son indicatrice de présence à l'instant t (qui vaut 1 ssi la donnée $y_{it}$ est connue et qui vaut 0 si la donnée $y_{it}$ est manquante).

-

On notera $\hat{y}_{it}^{d}$ l'estimateur dynamique pour l'individu i à l'instant t. Celui-ci peut-être fourni pour les non répondants comme pour les répondants.

Cet estimateur est dépendant de la configuration de la série de valeurs manquantes considérée, c'est pourquoi on parle en fait de $\hat{y}_{it,c}^{d}$ : l'estimateur dynamique dans le cas d'une configuration de valeurs manquantes c. L'indice c sera parfois omis pour alléger les notations.

-

On notera $\hat{y}_{it}^{s}$ l'estimateur statique pour l'individu i à l'instant t. Celui-ci peut être fourni pour les répondants comme les non répondants.

Cet estimateur ne dépend pas de la configuration de valeurs manquantes puisqu'il est déterminé indépendamment instant par instant. Cet estimateur statique dépend de la classe d'imputation k de l'individu non répondant, c'est-à-dire que les individus répondants de sa classe d'imputation seront considérés.

-

On notera $\hat{y}_{it,c}^{Y}$ l'estimateur combiné pour l'individu i à l'instant t dans la configuration de valeurs manquantes c.

- Les classes d'imputation k seront indicées de 1 à K. Dans une optique de cohérence, elles seront les mêmes pour les prévisions statiques que pour les combinaisons. Les classes de non réponse (qui potentiellement peuvent être les mêmes) seront indicées de 1 à L.

Premier mode de réalisation : Combinaison par régression linéaire

Selon ce mode de réalisation, l'estimateur combinée de la valeur manquante sera une combinaison linéaire d'un (ou plusieurs) estimateurs dynamiques et d'un (ou plusieurs) estimateurs statiques.

Pour trouver les coefficients de la combinaison linéaire, on va utiliser les coefficients de la régression linéaire de la vraie valeur sur les valeurs prédites par les différents estimateurs statiques et dynamiques, séparément pour chaque triplet (configuration de non réponse, date, classe d'imputation). Cette régression comportera une constante, qui permettra d'absorber le biais induit par le modèle individuel dynamique à l'instant t. La combinaison se fera séparément pour chacune des classes d'imputation.

Le modèle peut être le suivant :

$$Y_i = a + s\hat{y}_i^{s} + d\hat{y}_i^{d} + \varepsilon_i$$

Le modèle peut être estimé par « Moindres Carrés Ordinaires » séparément pour chaque triplet (date, classe, configuration de non réponse). L'estimateur statique reste le même pour toutes les configurations puisqu'il est calculé instant par instant sans tenir compte du reste de la courbe, mais l'estimateur dynamique change puisque, selon la configuration de non réponse, les données disponibles de la courbe ne sont pas les mêmes.

L'estimateur combiné d'une valeur manquante pour un individu i à l'instant t sera alors donné par :

$$\hat{y}_{i,t}^{\gamma} = a + s\,\hat{y}_{i,t}^{s} + d\,\hat{y}_{i,t}^{d} \qquad (1)$$

La mise en oeuvre de cette méthode peut être la suivante.

Pour un individu i non répondant à l'instant t, effectuer au moins une estimation statique $\hat{y}_{i,t}^{s}$ et au moins une estimation dynamique $\hat{y}_{i,t}^{d}$.

Pour chaque individu i' répondant au même instant t, calculer au moins un estimateur statique $\hat{y}_{i',t}^{s}$ et au moins un estimateur dynamique $\hat{y}_{i',t}^{d}$. Pour les estimateurs statiques, on considère les individus i' répondants de la même classe d'imputation que l'individu i non répondant pour lequel on recherche l'estimateur combiné, et on récupère la même valeur prédite quelle que soit la configuration de non réponse. Pour les estimateurs dynamiques, on récupèrera une valeur prédite différente pour chacune des configurations de non réponse étudiées. Par exemple, on « cache » les vraies valeurs autour de l'instant t considéré pour se retrouver dans la configuration de valeur manquante étudiée, puis ensuite on estime la valeur à l'instant considéré seulement à partir des valeurs non cachées. On exploite ainsi les prévisions dynamiques obtenues en reproduisant sur les individus i' répondants de la même classe la même configuration de non réponse que l'individu non répondant i au même instant.

Sur l'ensemble des individus i' répondants à l'instant t, séparément pour chaque triplet (instant ; classe ; configuration), on régresse la vraie valeur $y_{i',t}$ à l'instant donné, (i.e. la valeur collectée de l'individu i' répondant à l'instant t) sur les valeurs des estimateurs $\hat{y}_{i',t}^{s}$ et $\hat{y}_{i',t}^{d}$ pour obtenir les coefficients a, s et d de combinaison. La régression linéaire entre des valeurs prédites et des valeurs réelles pour déterminer des coefficients de combinaison linéaire est décrite dans la publication de F.X. Diebold, "Serial correlation and the combination of forecasts", Journal of Business and Economic Statistics, 6, 105-111, 1988.

On peut alors attribuer un jeu de coefficient a, s, d approprié aux estimateurs statiques $\hat{y}_{i,t}^{s}$ et dynamique $\hat{y}_{i,t}^{d}$ de chaque individu i non répondant à l'instant t.

S'il n'est pas possible de trouver le jeu de coefficient pour un triplet (instant ; classe ; configuration), par exemple si tous les individus d'une même classe sont manquants simultanément, on utilise le modèle estimé sur le duo (instant ; configuration). Si c'est encore impossible, on peut utiliser le modèle sur tous les instants et toutes classes pour la configuration. Si jamais l'estimateur dynamique ne peut pas être calculé pour une date donnée (par exemple dans le cas du premier et/ou du dernier instant qui ne peuvent pas être corrigés par interpolation linéaire), on utilisera simplement l'estimateur statique.

Deuxième mode de réalisation : Combinaison par fonction de pertes

Selon ce mode de réalisation, l'estimateur combinée de la valeur manquante sera également une combinaison linéaire d'un (ou plusieurs) estimateurs dynamiques et d'un (ou plusieurs) estimateurs statiques.

Cette méthode est proche de la précédente, puisqu'il s'agit toujours de trouver une combinaison linéaire des estimateurs statiques et dynamiques qui soit optimale. Selon ce deuxième mode de réalisation cependant, on va choisir un critère d'optimalité fondé sur la performance des estimateurs au niveau agrégé et non plus individuel car, dans le cadre d'une reconstitution des flux par exemple, l'objectif principal sera avant tout d'obtenir la meilleure estimation possible du total et non pas la meilleure prédiction individuelle.

Pour chaque instant t et chaque configuration c de non réponse, on va chercher le paramètre de combinaison $\varphi_{t,c}$ compris entre 0 et 1 tel que la prévision combinée

$$\hat{y}_{i}^{\gamma} = \varphi\,\hat{y}_{i}^{s} + (1 - \varphi)\hat{y}_{i}^{d} \qquad (2)$$

ait la meilleure performance possible au niveau collectif.

On calcule ainsi la perte $L(\hat{y})$ de chaque estimateur, statique et dynamique, comme :

$$L(\hat{y}) = \sum_r \frac{(1 - \hat{p}_{i'})w_{i'}}{\hat{p}_{i'}}E_{i'}{}^2 \qquad (3)$$

avec $\hat{p}_{i'}$ la probabilité de réponse estimée de l'individu à l'instant donné (t), avec $w_{i'}$ le poids de sondage de l'individu, et avec $E_{i'}$ l'erreur entre l'estimateur $\hat{y}_{i',t}$ et la valeur collectée $y_{i',t}$ pour ledit individu répondant à l'instant donné.

L'estimateur est d'autant meilleur que la perte est faible, et de plus, le critère tient compte des poids de sondage et des probabilités de non réponse.

On détermine alors un paramètre de combinaison φ comme :

$$\varphi = \frac{L(\hat{y}^d)}{L(\hat{y}^d) + L(\hat{y}^s)} \qquad (4)$$

Ce paramètre exprime que plus la perte de l'estimateur dynamique sera forte par rapport à celle l'estimateur statique, plus le poids de l'estimateur statique sera fort.

L'estimateur combiné $\hat{y}_{i,t}^{\gamma}$ pour l'individu donné i non répondant à l'instant donné t pourra alors être déterminé en appliquant le paramètre de combinaison φ à la combinaison linéaire des estimateurs statique $\hat{y}_{i,t}^s$ et dynamique $\hat{y}_{i,t}^d$ dans l'équation (2) définie ci-dessus :

$$\hat{y}_{i',t}^{\gamma} = \varphi\hat{y}_{i,t}^s + (1 - \varphi)\hat{y}_{i,t}^d .$$

L'estimateur combiné obtenu selon ce mode de réalisation ne sera pas sans biais car la combinaison d'estimateurs ne comporte pas de constante, le biais de l'estimation dynamique n'est donc pas corrigé. Ce biais sera cependant atténué par la combinaison linéaire, d'autant plus que, s'il est important, on peut penser que la perte de l'estimateur dynamique sera importante et donc son coefficient faible.

Les premier et deuxième modes de réalisation décrits ci-dessus donnaient un rôle symétrique aux estimateurs statiques et dynamiques. Les troisième et quatrième modes de réalisation décrits ci-dessous proposent de réaliser les estimations séquentiellement plutôt que simultanément.

Troisième mode de réalisation : Régression statique sur la prédiction dynamique

On part du constat que l'estimateur dynamique contient une information très riche sur l'individu et fournit une bonne prévision de la consommation. L'information statique peut alors intervenir en complément de cette estimation dynamique, permettant de l'affiner en prenant en compte la spécificité de l'instant et en particulier de supprimer les biais instantanés non captés par les modèles dynamiques.

Pour ce faire, à chaque instant (et pour chaque configuration de non réponse), on va modéliser le lien entre les estimations dynamiques et les vraies valeurs des individus (c'est-à-dire modéliser l'erreur commise par l'estimateur dynamique) pour tenter de supprimer son biais.

On postule une relation linéaire entre l'estimateur dynamique et la vraie valeur pour chaque individu i, par instant t, classe et configuration de valeur manquante. :

$$\hat{y}_{i,t}^{\gamma} = d\hat{y}_{i,t}^d + a + \varepsilon_i \qquad (5)$$

avec $\varepsilon_i$ suivant un bruit blanc.

On pourrait complexifier ce modèle en rajoutant d'autres variables explicatives que la prédiction dynamique dans la régression, par exemple le niveau de consommation sur la période précédente.

La mise en oeuvre de cette méthode peut être la suivante.

Pour chaque individu i' répondant à l'instant t, dans la même classe d'imputation que l'individu i non répondant que pour lequel on recherche un estimateur combiné, on calcule, dans chaque configuration de valeur manquante, les estimateurs dynamiques $\hat{y}^d_{i',t}$ et on collecte les vrais valeurs $y_{i',t}$. On peut alors déterminer par régression les coefficients d et a de la relation linéaire (5).

Puis, instant par instant, on utilise les estimations dynamiques d'un individu non répondant comme entrée de l'estimateur statique pour déterminer l'estimateur combiné selon la relation linéaire (5) et des coefficients déterminés par régression. La gestion des exceptions est la même que celle décrite en référence au premier mode de réalisation.

Quatrième mode de réalisation : Le plus proche voisin sur estimation dynamique

On présente maintenant une variante non paramétrique du troisième mode de réalisation. On suppose toujours que, pour chaque configuration de valeur manquante, il existe une relation, constante classe par classe, entre la vraie valeur $y_i$ pour un individu i et l'estimateur dynamique $\hat{y}^d_i$ mais on ne cherche pas à modéliser paramétriquement cette relation, ce qui permet d'être plus robuste, en évitant les problèmes liés à de mauvaises spécifications.

Instant par instant, lorsqu'une consommation est manquante pour un individu i, on va la remplacer par celle $y_{i',t}$ de l'individu i' répondant de sa classe qui lui ressemble le plus sur un critère donné, appelé plus proche voisin. Ici, le critère de proximité sera la prévision dynamique pour la configuration de non réponse étudiée.

On cherche l'individu i' répondant qui, pour la configuration c de la valeur manquante considérée, présente un estimateur dynamique $\hat{y}^d_{i',t}$ le plus proche de l'estimateur dynamique $\hat{y}^d_{i,t}$ de l'individu i non répondant considéré.

L'estimateur combiné $y_{i',t}$ pour l'individu i non répondant à l'instant donné t est alors l'estimateur statique de la valeur manquante fixée à la valeur collectée $y_{i,t}$ du plus proche voisin à l'instant donné.

Les méthodes décrites ci-dessus ne sont pas limitatives. Notamment, plusieurs estimateurs statiques et/ou dynamiques peuvent être pris en compte simultanément lors de la détermination d'un estimateur combiné pour un individu non répondant à un instant donné. De plus, d'autres variables peuvent être incorporées dans les modèles en compléments des estimateurs dynamiques et statiques. L'invention trouve notamment à s'appliquer dans le cadre de données manquantes dans des séries temporelles collectées par échantillonnage.

**Revendications**

1. Procédé de détermination d'une valeur manquante parmi des données collectées pour une pluralité d'individus à une pluralité d'instants, la valeur manquante étant associée à un individu donné (i) non répondant à un instant donné (t), le procédé comprenant les étapes de :

   - calcul d'un estimateur dynamique $\hat{y}^d_{i,t,c}$ de la valeur manquante à partir de valeurs collectées pour l'individu donné (i) à des instants précédents et suivants l'instant donné (t) ;

   - calcul d'un estimateur statique $\hat{y}^s_{i,t}$ de la valeur manquante à partir de valeurs relatives à des individus (i') répondants à l'instant donné (t) ;

   - détermination d'un estimateur combiné $\hat{y}^\gamma_{i,t}$ de la valeur manquante à partir de l'estimateur statique $\hat{y}^s_{i,t}$ et

de l'estimateur dynamique $\hat{y}_{i,t,c}^{d}$ .

2.

Procédé selon la revendication 1, dans lequel l'estimateur dynamique $\hat{y}_{i,t,c}^{d}$ est calculé pour une configuration (c) donnée de la valeur manquante, la configuration étant fonction de la longueur de la série de valeurs manquantes successives et de l'emplacement de la valeur manquante dans cette série.

3.

Procédé selon l'une des revendications 1 ou 2, dans lequel l'estimateur statique $\hat{y}_{i,t}^{s}$ est calculé pour une classe d'imputation (k) donnée à laquelle appartient l'individu donné non répondant à l'instant donné.

4.

Procédé selon l'une des revendications 1 à 3, dans lequel la détermination de l'estimateur combiné $\hat{y}_{i,t}^{\gamma}$ consiste en une combinaison linéaire des estimateurs statique $\hat{y}_{i,t}^{s}$ et dynamique $\hat{y}_{i,t,c}^{d}$ .

5. Procédé selon la revendication 4, comprenant les étapes de :

- pour chaque individu (i') répondant à l'instant donné (t), calculs d'un estimateur dynamique $\hat{y}_{i,t,c}^{d}$ et d'un estimateur statique $\hat{y}_{i',t}^{s}$ , et détermination d'un estimateur combiné $\hat{y}_{i',t}^{\gamma}$ comme la combinaison linéaire desdits estimateurs statique et dynamique : $\hat{y}_{i',t}^{\gamma} = a + s\,\hat{y}_{i',t}^{s} + d\,\hat{y}_{i,t,c}^{d}$ ;

- détermination de coefficients de la combinaison linéaire (a, s, d) à partir des individus (i') répondants à l'instant donné (t), par régression linéaire des valeurs collectées $y_{i',t}$ à l'instant donné (t) sur lesdits estimateurs statique $\hat{y}_{i',t}^{s}$ et dynamique $\hat{y}_{i,t,c}^{d}$ ;

- détermination de l'estimateur combiné $\hat{y}_{i,t}^{\gamma}$ pour l'individu donné (i) non répondant à l'instant donné (t) en appliquant lesdits coefficients (a, s, d) à la combinaison linéaire des estimateurs statique $\hat{y}_{i,t}^{s}$ et dynamique $\hat{y}_{i,t,c}^{d}$ .

6. Procédé selon la revendication 4, comprenant les étapes de :

- pour chaque individu (i') répondant à l'instant donné (t), calculs d'un estimateur dynamique $\hat{y}^d_{i',t,c}$ et d'un estimateur statique $\hat{y}^s_{i',t}$, et calculs d'une perte dudit estimateur statique et d'une perte dudit estimateur dynamique, chaque perte $L(\hat{y})$ étant calculée comme :

$$L(\hat{y}) = \sum_r \frac{(1 - \hat{p}_{i'})w_{i'}}{\hat{p}_{i'}} E_{i'}{}^2 \, ,$$

avec $\hat{p}_{i'}$ la probabilité de réponse estimée de l'individu à l'instant donné (t), avec $w_{i'}$ le poids de sondage de l'individu, et
avec $E_{i'}$ l'erreur entre l'estimateur $\hat{y}_{i',t}$ et la valeur collectée $y_{i,t}$ pour ledit individu à l'instant donné ;
- détermination d'un paramètre de combinaison $\varphi_c$ comme :

$$\varphi_c = \frac{L(\hat{y}_c{}^d)}{L(\hat{y}_c{}^d) + L(\hat{y}^s)}$$

- détermination de l'estimateur combiné $\hat{y}^\gamma_{i,t}$ pour l'individu donné (i) non répondant à l'instant donné (t) en appliquant le paramètre de combinaison $\varphi_c$ à la combinaison linéaire des estimateurs statique $\hat{y}^s_{i,t}$ et dynamique $\hat{y}^d_{i,t,c}$ comme suit :

$$\hat{y}^\gamma_{i',t} = \varphi_c \hat{y}^s_{i,t} + (1 - \varphi_c) \hat{y}^d_{i,t,c} \, .$$

7.

Procédé selon l'une des revendications 1 à 3, dans lequel la détermination de l'estimateur combiné $\hat{y}^\gamma_{i,t}$ consiste en une combinaison séquentielle des estimateurs statique $\hat{y}^s_{i,t}$ et dynamique $\hat{y}^d_{i,t}$.

8. Procédé selon la revendication 7, comprenant les étapes de :

- pour chaque individu (i') répondant à l'instant donné (t), calcul d'un estimateur dynamique $\hat{y}^d_{i',t}$ ;

- détermination de l'estimateur combiné $\hat{y}^\gamma_{i,t}$ pour l'individu donné (i) non répondant à l'instant donné (t) comme l'estimateur statique $\hat{y}^s_{i,t}$ de la valeur manquante calculée à partir de l'estimateur dynamique $\hat{y}^d_{i,t}$ de

l'individu non répondant et d'une relation estimée entre estimateurs dynamiques $\hat{y}_{i',t}^{d}$ et valeurs collectées $y_{i',t}$ sur les individus (i') répondants à l'instant donné (t).

9. Procédé selon la revendication 7, comprenant les étapes de :

- pour chaque individu (i') répondant à l'instant donné (t), calcul d'un estimateur dynamique $\hat{y}_{i',t,c}^{d}$ ;

- comparaison de l'estimateur dynamique $\hat{y}_{i,t}^{d}$ de l'individu donné (i) non répondant à l'instant donné (t) avec chaque estimateur dynamique $\hat{y}_{i',t,c}^{d}$ des individus (i') répondants à l'instant donné (t), et détermination d'un plus proche voisin comme étant l'individu (i') répondant à l'instant donné (t) ayant estimateur dynamique $\hat{y}_{i',t}^{d}$ le plus proche de l'estimateur dynamique $\hat{y}_{i',t,c}^{d}$ de l'individu donné (i) non répondant à l'instant donné (t) ;

- détermination de l'estimateur combiné $\hat{y}_{i,t}^{\gamma}$ pour l'individu donné (i) non répondant à l'instant donné (t) comme l'estimateur statique $y_{i',t}$ de la valeur manquante fixée à la valeur collectée $y_{i',t}$ du plus proche voisin à l'instant donné (t).

10. Procédé selon l'une quelconque des revendications précédentes, dans lequel les données collectées sont des données de consommation électrique.

# FIG. 1

Dates 1 à T

Individu

Individu i : cadre dynamique

Valeur manquante de i à t

Instant t : cadre statique

# FIG. 2

configuration

date 1

classe 1

estimateur dynamique

estimateur statique

date 2

estimateur statique

date 1

classe 2

estimateur dynamique

date 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. ARDILLY.** Techniques de sondages. Technip, 2006
- **R.T. CLEMEN.** Combining forecasts: A review and annotated bibliography. *International Journal of Forecasting,* 1989, 559-583
- **F.X. DIEBOLD.** Serial correlation and the combination of forecasts. *Journal of Business and Economic Statistics,* 1988, vol. 6, 105-111